# EUROPEAN PATENT SPECIFICATION

(11) **EP 1 604 573 B1**
(45) Date of publication and mention of the grant of the patent: **01.12.2010**
(21) Application number: 05104898.1
(22) Date of filing: 06.06.2005
(51) Int. Cl.: A23G 1/21, A23G 3/02, A23G 1/00, A23G 3/28, A23G 3/20, A23G 3/00

(54) **Method and device to make decorated hollow chocolate products**
Verfahren und Vorrichtung zur Herstellung von dekorierten Schokoladenhohlartikeln
Procédé et appareil de fabrication d'articles chocolats creux décorés

(30) Priority: 07.06.2004 IT UD20040118
(43) Date of publication of application: 14.12.2005
(73) Proprietor: SWEET SpA, 34170 Gorizia (IT)
(72) Inventor: Bonera, Andrea, 33100 Udine (IT); Mlakar, Fabio, 34170 Gorizia (IT); Bolzan, Stefano, 34076 Romans d'Isonzo (GO) (IT)
(74) Representative: Petraz, Davide Luigi

(56) References cited:
- EP-A1- 0 299 943
- EP-A1- 0 923 875
- EP-A2- 0 948 899
- DE-A1- 2 243 542
- DE-C- 433 901
- DE-U1- 29 808 288
- GB-A- 291 278
- US-A- 4 421 773
- US-A- 5 343 710
- US-A- 6 024 995
- US-A1- 2003 075 830
- DATABASE WPI Section Ch, Week 200263 Derwent Publications Ltd., London, GB; Class D13, AN 2002-588413 XP002338464 -& RU 2 185 071 C2 (LANDRIN CO LTD) 20 July 2002 (2002-07-20)
- PATENT ABSTRACTS OF JAPAN vol. 2002, no. 05, 3 May 2002 (2002-05-03) -& JP 2002 000181 A (MORINAGA & CO LTD), 8 January 2002 (2002-01-08)
- PATENT ABSTRACTS OF JAPAN vol. 009, no. 241 (C-306), 27 September 1985 (1985-09-27) -& JP 60 098947 A (FUJI NIYUUGIYOU KK), 1 June 1985 (1985-06-01)

## Description

### FIELD OF THE INVENTION

The present invention concerns a method and the relative device to make hollow chocolate products obtained in at least two parts of chocolate of different colors, of which at least one of the parts can have any aesthetic or decorative shape desired.

### BACKGROUND OF THE INVENTION

Two-colored chocolate products are known, for example eggs, consisting of two half-shells substantially identical to each other, each of which has a spot of darker chocolate, circular in shape, quite round or at most oval; when the two half-shells are coupled together, the product has a central band of one color, normally lighter, and the outer parts of the other color, normally darker. In the following description, for convenience, we shall use the term egg to indicate a generic hollow chocolate product.

In the state of the art, as disclosed for example in US-A-4.421.773, on which the preamble of the main claims 1 and 4 is based, the half-shells that constitute the eggs are normally produced separately, by cold molding, with a method articulated in two distinct steps. In a first step, the dark spot is produced by metering, molding and subsequently cooling in a cooling tunnel; in a second step the lighter chocolate is superimposed to complete the half-shell, and the whole is subjected to cooling. Then, two half-shells are coupled together to obtain the egg.

The first step to produce the dark spot normally provides to meter a suitable quantity of chocolate inside a concave impression made of plastic, and to perform a cold molding by means of a cooled shell made of metal, normally copper or aluminum. The shell has a full convex shape, mating with the shape of the concave impression.

The result obtained, depending on the quantity of chocolate and the shape of the impression, is a portion of half-shell of a circular or oval shape, which is then solidified and sent for coupling with the different colored chocolate in order to complete the half-shell.

This technique, well consolidated in the field of producing two-colored chocolate eggs, does not therefore allow to personalize and aesthetically characterize the products obtained; thus on the one hand the products are able to be mistaken for others, and do not univocally identify a specific producer, and on the other hand are not able to supply consumers, for example children, with attractive patterns and stimuli to the imagination and attention which will encourage consumers to purchase them rather than other products, less characterizing and personalized.

Purpose of the present invention is to achieve a method, and the relative device, which allow to make at least two-colored chocolate eggs, wherein the spot of one color can have any desired characterizing shape, for example in order to identify a producer, the type or quality of the product, an advertising campaign, a seasonal period, a particular festivity, a geographic area, a simple graphical or ornamental pattern, or any other feature connected to the egg or not.

Another purpose is to obtain the above with a device that is relatively simple to construct and in functioning, easily interchangeable in relation to the result to be obtained, and in which the steps of the method are not substantially modified with respect to the conventional ones.

The Applicant has devised and embodied the present invention to overcome the shortcomings of the state of the art and to obtain other advantages.

### SUMMARY OF THE INVENTION

The present invention is set forth and characterized in the main claims, while the dependent claims describe other innovative characteristics of the invention.

In accordance with the purposes indicated above, a device according to the present invention to make chocolate eggs decorated with spots of color having any shape, comprises at least a concave impression able to receive a metered quantity of chocolate such as to achieve the desired decorative spot.

Here, and in the following description, we shall speak generally of impression as a single element, meaning that the impression can be part of a mold, generally made of plastic material, which has 100 or more individual impressions to make a corresponding number of parts of the egg, or half-shells, for every cycle of production.

According to the invention, the device comprises at least a counter-mold, substantially convex in shape, and defining the pattern or shape of the spot to be made, and a convex shell, with a profile mating with the pattern or shape defined on the counter-mold.

More particularly, the counter-mold has hollow parts on its surface which define the pattern of the spot to be made.

The shell has mating full parts, or parts in relief, which, when the counter-mold and the shell are closed on the impression, are made to cooperate with the corresponding hollow parts of the counter-mold, so that the drop of chocolate previously cast in the concave impression assumes by molding the pattern thus defined.

When the counter-mold and the shell are removed from the concave impression, on the bottom of the impression a thin arched element remains deposited, the perimeter of which reproduces the desired pattern of the spot to be made.

From here on, the usual steps are performed: the cooling, solidifying and subsequent coupling with the chocolate of different color so as to obtain, at the end, the desired decorated half-shell, which will then be coupled with an analogous half-shell in order to obtain the complete egg.

It comes within the field of the invention that the two half-shells can have a different decoration from each other, just as the relative prevalent color can also be different.

With the present invention it is therefore possible to personalize as desired, easily and quickly, the decorations applied on a chocolate egg.

Moreover, the invention does not entail substantial modifications to conventional molding equipment, since its essential parts, such as the metering system and the concave impression, remain unchanged. The invention allows extremely rapid operations to modify the personalized pattern simply by replacing the counter-mold and shell, which promotes productions of limited entity and able to satisfy particular and momentary requirements of sellers and/or clients.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 shows a decorated chocolate egg according to the invention;
- fig. 2 is an exploded view of the molding device which achieves the half-shells of the egg in fig. 1;
- figs. 3a, 3b and 3c show the sequence of the steps in the molding method performed by the device in fig. 2.

### DETAILED DESCRIPTION OF A PREFERENTIAL FORM OF EMBODIMENT

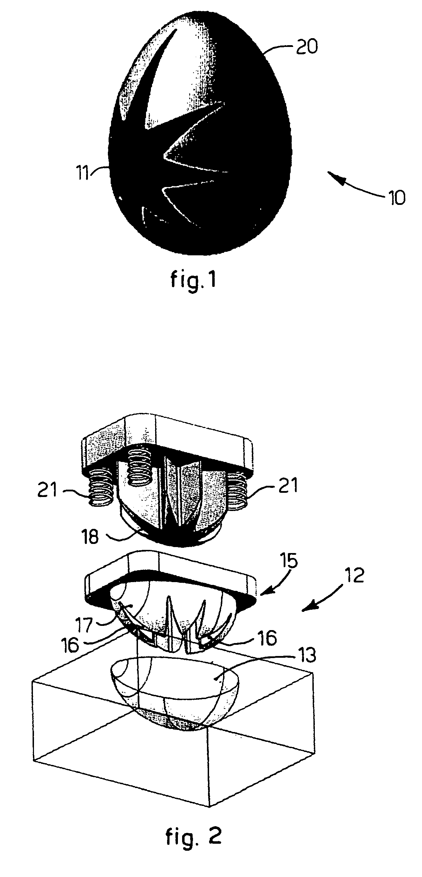

The reference number 10 in fig. 1 denotes a two-colored chocolate egg, which is made by coupling two half-shells obtained separately and then joined together. The egg 10, on each of the half-shells, has a spot 11 of a different color, in this case darker, with respect to the remaining part 20 of the half-shell. In this case, the spot 11, merely to give an example, has substantially the shape of a star. It comes within the field of the invention to achieve any shape or pattern, even complex, compatible with the size of the egg and the desired definition of the details.

The molding device to make half-shells of chocolate with spots 11 of any shape is shown in an exploded view in fig. 2, and is denoted generically by the reference number 12.

As said above, the molding device 12 can be a single element of a molding head which comprises a desired number of said elements, up to 100 and more, which can work simultaneously for every closed cycle of a molding equipment, the other parts of which are substantially conventional and are not shown in detail.

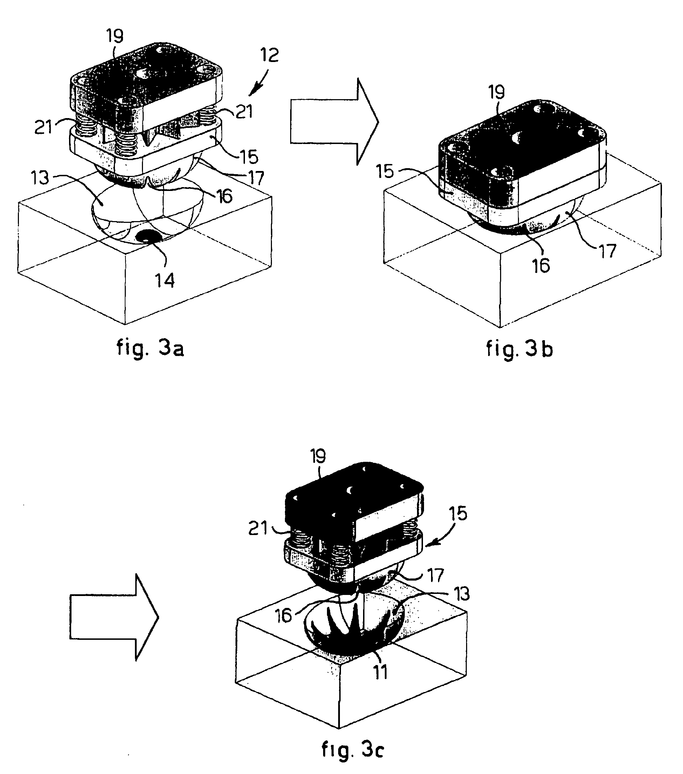

The device 12 comprises a concave impression 13, usually made of plastic material, inside which, in a conventional manner, a drop 14 of chocolate having the color of the decorative spot 11 to be made is cast (fig. 3a). The quantity of chocolate metered for the spot 14 obviously depends on the size, in terms of amplitude and thickness, of the egg 10 and the size of the spot 11.

The device 12 also comprises a counter-mold 15, consisting of an impression 17 having hollow parts 16 which reproduce the pattern of the spot 11 to be made. In this case, the hollow parts 16 are configured in such a manner as to reproduce the shape of a star, but substantially every shape, even complex, can be reproduced by means of an appropriate configuration of the counter-mold 15.

The device 12 comprises a convex shell 18, whose parts in relief substantially reproduce positively the hollow parts 16 of the impression 17 of the counter-mold 15. In this case, the counter-mold 17 is assembled on a plate 19 having elastic shock-absorber means 21 which intervene during the closed step of the molding device 12.

The plate 19 can be associated in a conventional manner with movement means, cooling means and any other means necessary for use in a cold molding method.

After the step of casting the drop 14, the counter-mold 15 and shell 18 are closed on the concave impression 13 (fig. 3b), with a determinate pressure, so as to cold mold the drop of chocolate 14, impressing thereon the shape determined by the pattern of the hollow parts 16.

After a determinate consolidation time, the shell 18 and counter-mold 15 are removed from the impression 13, on the bottom of which the spot 11 having the desired pattern remains deposited.

The last steps are conventional and provide to cool the chocolate spot 11 in a cooling tunnel to obtain the consolidation thereof, and subsequently to couple it with the chocolate 20 of different color, this too being accomplished in a conventional manner, in order to complete the half-shell. Finally, two half-shells, each with its own spot 11, the same or different, are joined together in order to obtain the egg 10.

It is clear, however, that modifications and/or additions of parts may be made to the method and device as described heretofore, without departing from the field and scope of the present invention. For example, the device 12 can achieve, not only any shape, but substantially continuous, like the spot 11 shown in the drawings, but also a plurality of separate spots which, together, constitute the decoration of the same half-shell.

## Claims

1. Method to make decorated chocolate eggs (10), comprising at least a step wherein a drop of chocolate (14) is cast inside a concave impression (13),
**characterized in that** it comprises:
- a step wherein, inside said concave impression (13), a counter-mold (15) is inserted, having a convex impression (17) on the surface of which hollow through parts (16) are made, which reproduce the desired decoration (11) to be made on said egg (10); and
- a step wherein a convex shell (18), including parts in relief which substantially reproduce positively said hollow parts (16), is closed on said counter-mold (15) in order to achieve the molding from which said decoration (11) is obtained.

2. Method as in claim 1, **characterized in that** said molding is performed cold.

3. Method as in claim 1 or 2, **characterized in that** said concave counter-mold (15) and said convex shell (18) are replaced on each occasion according to the desired decoration (11) to be made.

4. Device to make a decorated chocolate egg (10), comprising at least a concave impression (13) able to receive inside it a drop of chocolate (14), **characterized in that** it comprises:
- a counter-mold (15), able to be inserted into said concave impression (13) and having a convex impression (17) on which hollow through parts (16) are made, reproducing the desired decoration (11) to be made on said egg (10); and
- a convex shell (18), able to be inserted into said counter-mold (15) and including parts in relief which substantially reproduce positively said hollow parts (16).

5. Device as in claim 4, **characterized in that** at least said convex shell (18) is associated with cooling means.

6. Device as in claim 4 or 5, **characterized in that** at least said counter-mold (15) and said shell (18) are interchangeable according to the shape of the decoration (11) to be made.

7. Device as in any claim from 4 to 6, **characterized in that** said device (12) is inserted in a molding apparatus comprising a plurality of groups consisting of at least a counter-mold (15), a shell (18) and a plurality of impressions (13).

## Patentansprüche

1. Verfahren zur Herstellung von dekorierten Schokoladen-Eiern (10), umfassend mindestens einen Schritt, bei dem ein Tropfen Schokolade (14) innerhalb einer konkaven Vertiefung (13) gegossen wird, **dadurch gekennzeichnet, dass** es umfasst:
- einen Schritt, bei dem innerhalb der konkaven Vertiefung (13) eine Gegenform (15) eingebracht wird, die eine konvexe Erhebung (17) aufweist, auf dessen Oberfläche ausgesparte Teile (16) vorgesehen sind, welche die gewünschte, auf dem Ei (10) herzustellende Dekoration (11) reproduzieren; und
- einen Schritt, bei dem eine konvexe Schale (18), die hervorstehende Teile umfasst, welche die ausgesparten Teile (16) im Wesentlichen positiv wiedergeben, auf die Gegenform (15) geschlossen wird, um das Gießen durchzuführen, aus dem die Dekoration (11) entsteht.

2. Verfahren nach Anspruch 1, **dadurch gekennzeichnet, dass** das Gießen kalt durchgeführt wird.

3. Verfahren nach Anspruch 1 oder 2, **dadurch gekennzeichnet, dass** die Gegenform (15) und die Schale (18) bei Gelegenheit ausgetauscht werden, je nach der gewünschten herzustellenden Dekoration (11).

4. Vorrichtung zur Herstellung eines dekorierten Schokoladen-Eies (10), umfassend mindestens eine konkave Vertiefung (13), die geeignet ist, einen Tropfen Schokolade (14) darin aufzunehmen, **dadurch gekennzeichnet, dass** es umfasst:
- eine Gegenform (15), die zum Einbringen in die konkave Vertiefung (13) geeignet ist und eine konvexe Erhebung (17) aufweist, auf der ausgesparte Teile (16) vorgesehen sind, welche die gewünschte, auf dem Ei (10) herzustellende Dekoration (11) reproduzieren; und
- eine konvexe Schale (18), die zum Einbringen in die Gegenform (15) geeignet ist und hervorstehende Teile aufweist, welche die ausgesparten Teile (16) im Wesentlichen positiv wiedergeben.

5. Vorrichtung nach Anspruch 4, **dadurch gekennzeichnet, dass** mindestens die konvexe Schale (18) mit einer Einrichtung zum Abkühlen verbunden ist.

6. Vorrichtung nach Anspruch 4 oder 5, **dadurch gekennzeichnet, dass** mindestens die Gegenform (15) und die Schale (18) austauschbar sind, je nach der gewünschten herzustellenden Dekoration (11).

7. Vorrichtung nach einem der Ansprüche 4 bis 6, **dadurch gekennzeichnet, dass** die Vorrichtung (12) in einen Gießapparat eingebracht ist, der eine Mehrzahl an Gruppen umfasst, bestehend aus mindestens einer Gegenform (15), einer Schale (18) und einer Mehrzahl an Vertiefungen (13).

## Revendications

1. Procédé de fabrication d'oeufs en chocolat décorés (10), comprenant au moins une étape consistant à faire couler une goutte de chocolat (14) à l'intérieur d'une empreinte concave (13),
**caractérisé en ce qu'**il comprend :
- une étape consistant à introduire, à l'intérieur de ladite empreinte concave (13), un contre-moule (15) possédant une empreinte convexe (17) en surface de laquelle sont ménagées des parties ouvertes creuses (16) qui reproduisent le décor (11) que l'on souhaite appliquer audit oeuf (10) ; et
- une étape consistant à refermer une coque convexe (18), comprenant des parties en relief qui reproduisent sensiblement en positif lesdites parties creuses (16), sur ledit contre-moule (15) afin de réaliser le moulage à partir duquel s'obtient ledit décor (11).

2. Procédé selon la revendication 1, **caractérisé en ce que** ledit moulage s'effectue à froid.

3. Procédé selon la revendication 1 ou 2, **caractérisé en ce que** ledit contre-moule concave (15) et ladite coque convexe (18) sont remplacés à chaque occasion en fonction du décor (11) que l'on souhaite réaliser.

4. Dispositif de fabrication d'un oeuf en chocolat décoré (10), comprenant au moins une empreinte concave (13) apte à recevoir à l'intérieur une goutte de chocolat (14), **caractérisé en ce qu'**il comprend :
- un contre-moule (15) pouvant être introduit dans ladite empreinte concave (13) et possédant une empreinte convexe (17) en surface de laquelle sont ménagées des parties ouvertes creuses (16) reproduisant le décor (11) que l'on souhaite appliquer audit oeuf (10) ; et
- une coque convexe (18) pouvant être introduite dans ledit contre-moule (15) et comprenant des parties en relief qui reproduisent sensiblement en positif lesdites parties creuses (16).

5. Dispositif selon la revendication 4, **caractérisé en ce qu'**au moins ladite coque convexe (18) est associée à un moyen de refroidissement.

6. Dispositif selon la revendication 4 ou 5, **caractérisé en ce qu'**au moins ledit contre-moule (15) et ladite coque (18) sont interchangeables en fonction de la forme du décor (11) à réaliser.

7. Dispositif selon l'une quelconque des revendications 4 à 6, **caractérisé en ce que** ledit dispositif (12) est introduit dans un appareil de moulage comprenant une pluralité de groupes consistant en au moins un contre-moule (15), une coque (18) et une pluralité d'empreintes (13).
